# EUROPÄISCHE PATENTSCHRIFT

(11) **EP 0 551 816 B1**
(45) Veröffentlichungstag und Bekanntmachung des Hinweises auf die Patenterteilung: **30.10.1996**
(21) Anmeldenummer: 93100074.9
(22) Anmeldetag: 05.01.1993
(51) Int. Cl.: B29C 47/92, B29B 7/48, B29C 47/40

(54) **Schneckenmaschine mit Stauelementen**
Extruding machine with throttle elements
Extrudeuse à vis avec des éléments d'étranglement

(30) Priorität: 15.01.1992 DE 4200788
(43) Veröffentlichungstag der Anmeldung: 21.07.1993
(73) Patentinhaber: BAYER AG, 51368 Leverkusen (DE)
(72) Erfinder: Kohlgrüber, Klemens, Dr., W-5067 Kürten (DE); Ullrich, Martin, Dipl.-Ing., W-5090 Leverkusen (DE)

(56) Entgegenhaltungen:
- DE-A- 2 526 739
- DE-A- 2 924 800
- DE-A- 3 731 336
- DE-A- 4 017 558
- FR-A- 1 133 446
- US-A- 3 501 807
- PATENT ABSTRACTS OF JAPAN vol. 11, no. 86 (M-572)(2533) 17. März 1987 & JP-A-61 241 123 (MITSUBISHI HEAVY IND LTD)

## Beschreibung

Die Erfindung geht aus von einer mehrwelligen Schneckenmaschine mit mindestens einer den Schneckenraumquerschnitt ausfüllenden, senkrecht zu den Schneckenwellen stehenden Stauscheibe, zum Rückstau eines durch die Schneckenmaschine transportierten Produktes und zur Erzeugung eines lokalen Druckanstieges. Die Stauscheibe ist axial fixiert aber frei drehbar bezüglich der Schneckenwellen angeordnet und weist mindestens eine Produktdurchtriffsöffnung auf.

Für den Einsatz von Schneckenmaschinen in der chemischen Verfahrenstechnik oder bei der Kunststoffverarbeitung können die Schneckenwellen mit unterschiedlichen Elementen (zum Schneckenbesatz) bestückt werden. Die Elemente können nach Art von Bausätzen auf die Schneckenwellen aufgeschoben werden und sind mit diesen (z.B. über eine Nut/Feder-Verbindung) formschlüssig verbunden. Typische Besatzelemente sind z.B. fördernde Gewindeelemente, Knetscheiben, linksgängige Exzenterscheiben, linksgängige Gewinde und Stauscheiben. Mit Stauscheiben kann erreicht werden, daß sich die Schnecke über eine bestimmte Rückstaulänge mit dem Produkt füllt, so daß an dieser Stelle ein erhöhter Produktdruck auftritt. Ein erhöhter lokaler Produktdruck ist z.B. erforderlich, wenn in bestimmten Schneckenabschnitten die Produktmischung durch eine intensivierte Strömung verbessert werden soll oder ein erhöhter Energieeintrag stattfinden soll, um eine Produktplastifizierung in einer stromaufliegenden Knetzone zu beeinflussen. Ferner können mit Hilfe von Produktstauzonen (Produktstopfen) in Verdampferschnecken verschiedene Druckstufen verfahrenstechnisch voneinander abgetrennt werden. Schließlich besteht eine Anwendung von Stauscheiben darin, daß eine chemische Reaktion durch erhöhten Produktdruck beschleunigt werden kann.

In der Praxis sind Stauelemente in Schneckenmaschinen von besonderem Interesse, deren Durchtrittsquerschnitt verstellbar ist, so daß der Staudruck einstellbar ist.

Bekannt sind aus Scheiben bestehende, mit den Schneckenwellen rotierende, d.h. fest mit den Schneckenwellen verbundene, axial versetzte Stauscheiben. Ein grundsätzliches Problem ist dabei das Totraumvolumen im Gebiet der Stauscheiben. Darunter ist zu verstehen, daß um die Stauscheiben herum lokale Zonen vorhanden sind, die nur schlecht oder unter Umständen überhaupt nicht von dem Produkt durchströmt werden. In solchen Totraumvolumina können die Verweilzeiten für das Produkt unzulässig hohe Werte erreichen.

Ferner ist aus Patent Abstract of Japan, Vol. 11, Nr. 86 (M-572 (2533)) ein Zweiwellenschneckenextruder mit einer Stauscheibe zum Rückstau eines durch den Extruder transportieren Produktes bekannt, wobei die senkrecht zu den Extruderwellen stehende Stauscheibe praktisch den gesamten Extruderquerschnitt ausfüllt und axial fixiert aber relativ zu den Extruderwellen frei drehbar angeordnet ist und mindestens eine Produktdurchtrittsöffnung aufweist. Die Stauscheibe ist jedoch in diesem Fall mit dem Extrudergehäuse fest verbunden.

Darüber hinaus wird in dem US-Patent US 3 501 807 eine zweiwellige Knetmaschine mit einer senkrecht zu den Schneckenwellen eingebauten Stauscheibe zur Abtrennung einer Kompressions- und Dekompressionszone beschrieben. Die Stauscheibe ist ebenfalls relativ zu den Schneckenwellen frei drehbar angeordnet; d.h. die Drehung der Schneckenwellen wird durch die Stauscheibe nicht behindert. Die Stauscheibe ist aber wiederum fest in das Gehäuse eingebaut, so daß das Maschinengehäuse zu diesem Zweck modifiziert werden muß.

Hier setzt die Erfindung an. Es liegt die Aufgabe zugrunde, Stauelemente für eine Mehrwellenschneckenmaschine zu entwickeln, die ohne konstruktionstechnische Modifizierung des Maschinengehäuses eingebaut werden können und ein möglichst geringes Totraumvolumen aufweisen. Außerdem sollen die Stauelemente eine möglichst kurze Baulänge haben, möglichst einfach aufgebaut und mit Schneckenmaschinen üblicher Bauart kompatibel sein.

Ausgangspunkt und Gegenstand der Erfindung ist dabei eine mehrwellige Schneckenmaschine mit mindestens einer den Schneckenraumquerschnitt ausfüllenden, senkrecht zu den Schneckenwellen stehenden Stauscheibe, die axial fixiert, aber frei drehbar bezüglich der Schneckenwellen angeordnet ist und mindestens eine Produktdurchtrittsöffnung aufweist.

Die erfindungsgemäße Lösung der oben beschriebenen Aufgabe besteht darin, daß am Umfang der Stauscheibe zum Schneckengehäuse hin ein radiales Spiel S₁ verbleibt, daß die Stauscheibe in axialer Richtung fixiert, aber mit radialem Spiel auf formschlüssig mit den Schneckenwellen verbundenen Distanzhülsen derart gelagert ist, daß die Drehung der Distanzhülsen relativ zu der Stauscheibe nicht behindert wird und daß die Distanzhülsen als Besatzelemente auf die Schneckenwellen aufschiebbar sind.

Der freie Querschnitt kann bei einer spaltförmigen Produktdurchtrittsöffnung in einfacher Weise mittels einer am Schneckengehäuse angebrachten Stellschraube eingestellt werden, wenn die Stellschraube in den Querschnitt der Produktdurchtrittsöffnung hineinragt.

Vorteilhaft setzt sich die Stauscheibe aus zwei - bis auf ein abgeschnittenes Segment - ringförmigen Scheiben zusammen, wobei die Scheiben frei drehbar derart an den Schneckenwellen angeordnet sind, daß die Basislinien der abgeschnittenen Segmente aneinander angrenzen. Diese Ausführung hat den Vorteil, daß sich die zweiteilige Stauscheibe leichter auf den Schneckenwellen montieren läßt und auch einfacher herzustellen ist. Die zweiteilige Stauscheibe kann z.B. durch Stifte an der Basislinie verbunden und damit gegen Verdrehung fixiert werden. Dadurch wird der Vorteil der getrennten Element-Montage der einzelnen Wellen mit dem Vorteil einer "achtförmigen" einzelnen Scheibe (Sicherung gegen Verdrehung) verbunden.

Gemäß einer Weiterentwicklung kann die Stauscheibe mit einer Vielzahl von Bohrungen zum Produktdurchtritt versehen sein. Eine solche Stauscheibe hat eine Doppelfunktion: Neben ihrer Funktion als Stauelement kann sie auch zur Produktdispergierung eingesetzt werden.

Die Produktdispergierung kann weiterhin dadurch verbessert werden, daß die fest mit der Schneckenwelle verbundene Distanzhülse ebenfalls Produktdurchtrittsöffnungen aufweist.

Eine verfahrenstechnisch wichtige Weiterentwicklung besteht ferner darin, daß im Bereich der Stauscheibe (in Produktflußrichtung vor der Stauscheibe oder in der Stellschraube) ein Drucksensor zur Messung des Druckanstieges im Schneckenraum angeordnet ist und daß der Druckmeßwert einer Regelvorrichtung zugeführt wird, die den freien Querschnitt der Produktdurchtrittsöffnung so nachregelt, daß der Betriebsdruck im Bereich der Stauscheibe konstant bleibt. Zu diesen Zweck hat sich die einfache Nachstellmöglichkeit mit Hilfe der am Schneckengehäuse angebrachten Stellschraube gut bewährt.

Mit der Erfindung werden folgende Vorteile erzielt:
- Das Stauelement läßt sich an einer beliebigen Stelle der Schneckenwelle einbauen.
- Die Baulänge der neuen Stauscheibe ist besonders kurz, so daß auch die Totraumvolumina klein bleiben.
- Der konstruktionstechnische und maschinenbauliche Aufwand bleibt relativ klein. Insbesondere braucht das Schneckengehäuse nicht verändert zu werden.
- Der Querschnitt für den Produktdurchtritt läßt sich in einfacher Weise verstellen, so daß die Einstellung des gewünschten Produktdrucks im Bereich der Stauscheibe problemlos ist.
- Es können ohne weiteres mehrere Stauscheiben hintereinander abschnittweise auf den Schneckenwellen angeordnet werden und im Zwischenraum zwischen zwei Stauscheiben andere übliche Besatzelemente, wie z.B. Knet- und/oder Mischelemente, eingebaut werden.
- Das Stauelement läßt sich auch als Mischelement verwenden, insbesondere wenn es mit axialen oder schrägen Bohrungen in den stehenden Stauscheiben und gegebenenfalls zusätzlich in den drehenden Distanzhülsen versehen wird.
- In der Stellvorrichtung des Stauelementes, insbesondere in der Stellschraube, können vorteilhaft Sensoren eingebaut werden. Beispielsweise läßt sich im Produktstrom die Produkttemperatur messen. Die Messung der Produkttemperatur stellt normalerweise ein Problem dar, da Produktraum-tangierende Sensoren im Gehäuse eine "Mischtemperatur" messen und sich die normalen Schneckenelemente - im Gegensatz zum Stauelement - drehen, so daß diese Sensoren nicht die wahre Produkttemperatur in der Tiefe der Produktschicht messen können.

Im folgenden wird die Erfindung anhand von Zeichnungen und Ausführungsbeispielen näher erläutert. Es zeigen:
- Fig. 1: verschiedene Besätze für eine Zweiwellenschneckenmaschine,
- Fig. 2: eine für die Zweiwellenschneckenmaschine gemäß Fig. 1 geeignete Stauscheibe (Querschnitt A-B in Fig. 1) mit verstellbarem Durchtrittsquerschnitt,
- Fig. 3: eine Draufsicht und Seitenansicht der Stauscheibe,
- Fig. 4: eine Seitenansicht der zur Stauscheibe gehörigen zweiteiligen Distanzhülse,
- Fig. 5: eine Draufsicht und Seitenansicht einer mit Bohrungen versehen Distanzhülse,
- Fig. 6: einen Querschnitt durch die Stauscheibe und die Distanzhülse in eingebautem Zustand,
- Fig. 7: eine Druckregelung in einer Schneckenmaschine unter Verwendung einer verstellbaren Stauscheibe und
- Fig. 8: eine Zweiwellenschneckenmaschine mit mehreren Stauzonen.

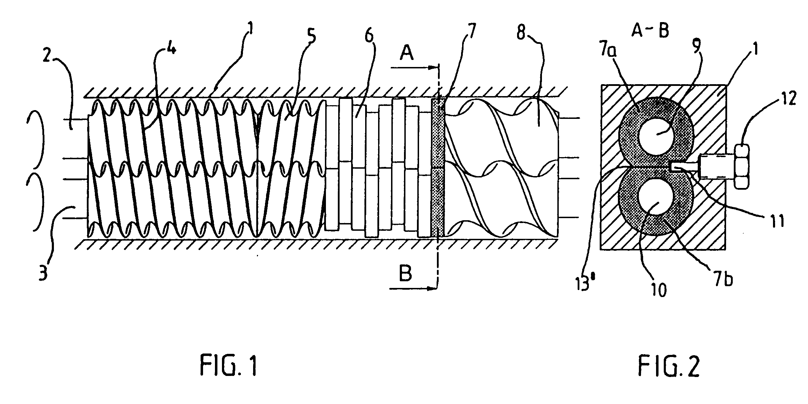

Bei der schematisch dargestellten Zweiwellenschneckenmaschine gemäß Fig. 1 sind nur das Gehäuse 1, die Schneckenwellen 2 und 3 mit verschiedenen Besatzelementen 4, 5, 6, 7 und 8 dargestellt. Bei diesen Besatzelementen handelt es sich um fördernde Gewindeelemente 4 und 8 mit verschiedener Steigung, linksgängige Gewindeelemente 5, Exzenterscheiben 6 und Stauscheiben 7. Die Besatzelemente werden nacheinander auf die Schneckenwellen aufgesteckt und sind aufgrund einer Nut/Feder-Arretierung formschlüssig mit diesen verbunden, d.h. die Elemente drehen sich mit den Schneckenwellen mit. Auch die konventionellen, axial auf den Wellen versetzten Stauscheiben waren bisher mit den Schneckenwellen formschlüssig verbunden. Im Gegensatz dazu sind bei der erfindungsgemäßen Schneckenmaschine die Stauscheiben 7 frei drehbar auf den einzelnen Schneckenwellen 2 und 3 angeordnet, so daß im montierten Zustand die Stauscheibe 7 bei Drehung der Schneckenwellen unveränderlich an Ort und Stelle stehen bleibt.

Gemäß Fig. 2 (Querschnittsdarstellung) ist die Stauscheibe 7 entsprechend dem Querschnitt des Schneckengehäuses 1 achtförmig ausgebildet. Die axialen Öffnungen 9 und 10 der Stauscheibe 7 haben gegenüber den Schneckenwellen 2 und 3 so viel Spiel, daß die Drehung der Wellen nicht behindert wird, Am Scheitel der achtförmigen Stauscheibe 7 ist eine spaltförmige Produktdurchtrittsöffnung 11 ausgespart, deren Querschnitt mittels einer am Schneckengehäuse 1 angebrachten Stellschraube 12 einstellbar ist. Alternativ könnte die Produktdurchtrittsöffnung auch dadurch realisiert werden, daß zwischen der Peripherie der Stauscheibe und dem Schneckengehäuse ein schmaler Spalt offen bleibt.

Die Stauscheibe 7 muß nicht notwendigerweise einteilig ausgeführt sein. Die Montage wird vielmehr erleichtert, wenn sie entlang der Symmetrielinie 13' in zwei - bis auf ein abgeschnittenes Segment - ringförmige Scheiben 7a und 7b geteilt wird, wobei in eingebautem Zustand die Basislinien der abgeschnittenen Segmente aneinander angrenzen (an der Symmetrielinie 13).

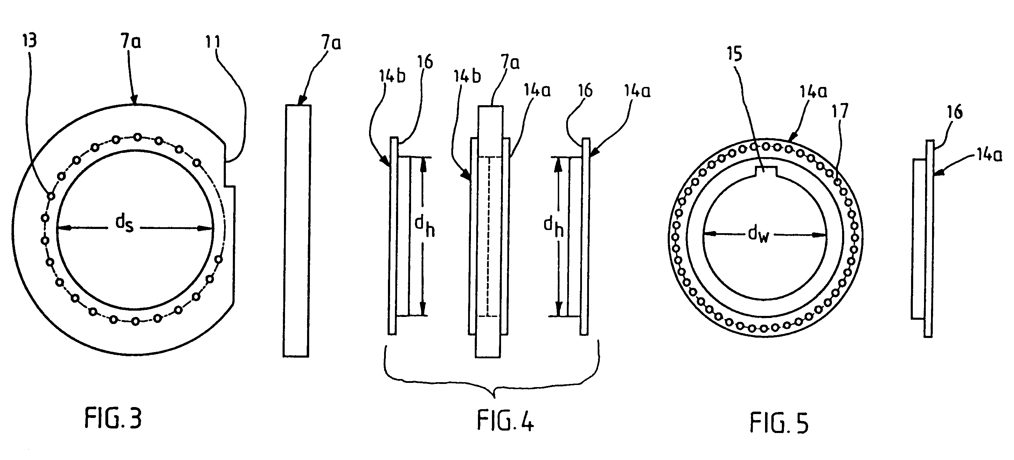

Eine derartige Scheibenhälfte ist auch in Fig. 3 gezeigt. Außer der schon erwähnten Produktdurchtrittsöffnung 11 ist die Stauscheibe (d.h. die beiden Stauscheibenhälften) mit einer Vielzahl auf einem Kreis angeordneten Produktdurchtrittsbohrungen 13 versehen. Neben ihrer Funktion als Stauelement kann die Stauscheibe dann zur Produktdispergierung eingesetzt werden.

In Fig. 4 wird eine zweiteilig ausgebildete Distanzhülse in Verbindung mit der Stauscheibenhäfte 7a nach Art einer Explosionszeichnung gezeigt. Die beiden Distanzhülsenteile 14a, 14b werden, wie aus dem mittleren Teilbild von Fig. 4 ersichtlich, von links und rechts in die Öffnung der Stauscheibe 7a geschoben und schließen bündig aneinander an. Der Außendurchmesser dₕ der Distanzhülse 14 stimmt, bis auf das Spiel, mit dem Innendurchmesser dₛ der Stauscheibe überein, so daß sich die Stauscheibenhälften 7a, 7b frei um die zugehörigen Distanzhülsen drehen können. Der im linken Teilbild von Fig. 4 ersichtliche Kragen 16 an der Distanzhülse 14 dient als axialer Abstandshalter zum nächsten sich mit der Schneckenwelle drehenden Besatzelement. Ohne diese Maßnahme würden die Stirnflächen der ruhenden Stauscheibe 7 und des angrenzenden Besatzes, z.B. der Exzenterscheiben 6 in Fig. 1, aneinanderschleifen.

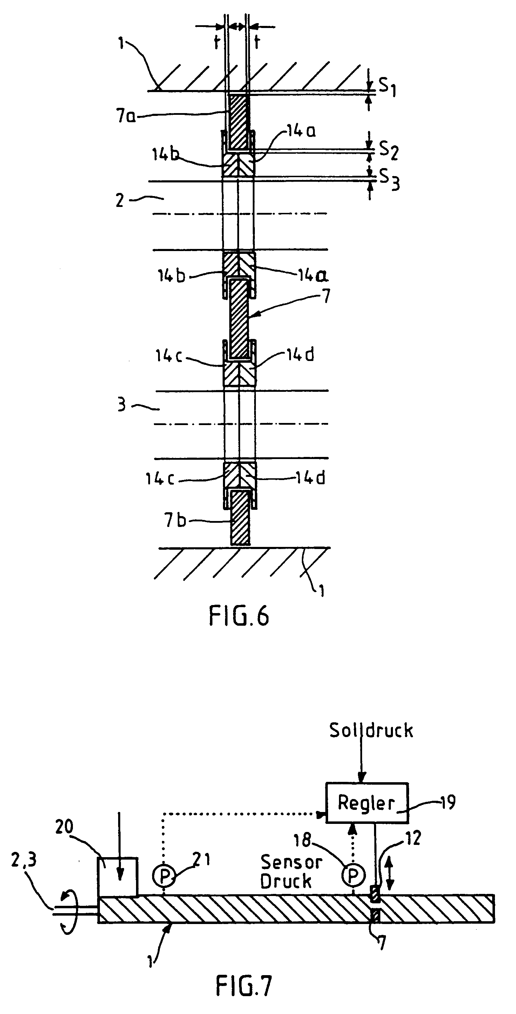

Gemäß Fig. 5 kann der Kragen 16 der Distanzhülse 14 a ebenfalls mit Produktdurchtrittsöffnungen 17 versehen sein. Die Distanzhülse 14 wird auf die Schneckenwelle 2 oder 3 aufgesteckt und ist mit ihr über die Nut 15, die in eine axial verlaufende Paßfeder der Schneckenwelle 2 oder 3 eingreift, formschlüssig verbunden. In analoger Weise sind die Distanzhülsenteile 14a, 14b in Fig. 4 mit der Schneckenwelle verbunden. Eine besonders gute Dispergierwirkung ergibt sich, wenn eine derartige Distanzhülse mit einer Stauscheibe gemäß Fig. 3 kombiniert wird, die ebenfalls Produktdurchtrittsbohrungen 13 aufweist. Aufgrund der unterschiedlichen Lochanzahl der stehenden Stauscheibe und der sich drehenden Distanzhülsen wird die Dispergierwirkung erheblich verbessert. Selbstverständlich können sowohl die Bohrungen 13 als auch die Bohrungen 17 jeweils auf unterschiedlichen Radien angebracht werden.

Der Deutlichkeit halber werden die Stauscheibe und die zugehörigen Distanzhülsen in Fig. 6 noch einmal in eingebautem Zustand gezeigt. Die Distanzhülsen sind entsprechend Fig. 4 wiederum zweiteilig ausgebildet. Auf die Schneckenwelle 2 sind die Distanzhülsen 14a, 14b, auf die Welle 3 die Distanzhülsen 14c und 14d aufgesteckt. Die Stauscheibe 7 setzt sich aus den beiden Hälften 7a und 7b zusammen. Zwischen den Stauscheibenhälften und den Distanzhülsen verbleibt ein radiales Spiel S₂, damit sich die Stauscheibe um die Distanzhülsen drehen kann. Aus dem gleichen Grund ist ein axiales Spiel t zwischen dem Kragen 16 der Distanzhülse und der Stauscheibe 7 erforderlich. Schließlich muß auch am Umfang der Stauscheibe 7 zum Schneckengehäuse 1 hin ein radiales Spiel S₁, verbleiben. Das Spiel S₃ wird zum Aufschieben der Distanzhülsen auf die Wellen, wie bei Besatzelementen üblich, ausgeführt.

Die Stauscheibe mit verstellbarem Produktdurchtrittsquerschnitt gemäß Fig. 2 kann vorteilhaft mit einer Regelvorrichtung kombiniert werden, die in Fig. 7 schematisch dargestellt ist. Wird der Produktdruck (in Produktflußrichtung) vor der Stauscheibe 7 mit Hilfe eines Sensors 18 gemessen, so kann dieser mit Hilfe der Stellschraube 12 von einem Regler 19 konstant gehalten werden. Auf diese Weise kann man zum Beispiel bei einer in der Schneckenmaschine durchgeführten chemischen Reaktion einen konstanten Druck realisieren. Eine andere wichtige Anwendung einer derartigen Druckregelstrecke besteht zum Beispiel darin, daß der Produktdruck nach einer Produkteinlaßöffnung 20 mit Hilfe des Sensors 21 gemessen und konstant gehalten wird, um zu vermeiden, daß die Einlaßöffnung 20 bei einem Produktrückstau in der Schnecke überflutet wird. Die Gefahr der Überflutung besteht grundsätzlich, wenn die Schnecke mit unterschiedlichen Drehzahlen und Durchsätzen betrieben wird.

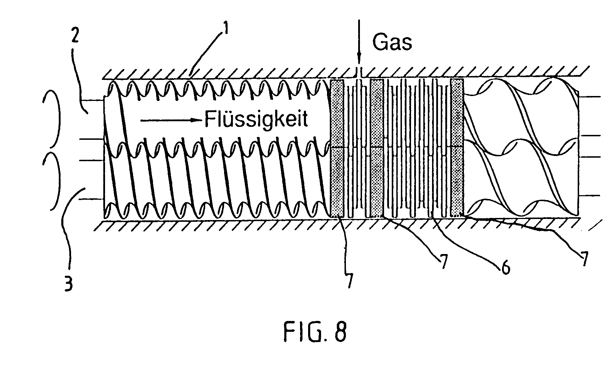

Ein typisches Anwendungsbeispiel, bei dem mehrere Stauscheiben 7 abschnittweise längs der Schneckenwellen 2 und 3 angeordnet sind, ist in Fig. 8 dargestellt. Die Abschnitte zwischen den Stauscheiben 7 sind mit Exzenterscheiben 6 bestückt. Stauzonen dieser Art haben sich vor allem zur Eintragung und Dispergierung eines Gases in eine hochviskose Flüssigkeit bewährt, wenn die Stauscheiben 7 und Distanzhülsen 14 gemäß Fig. 3 und Fig. 4 zusätzliche Produktdurchtrittsbohrungen 13 und 17 aufweisen. Die sich in solchen Mischzonen abspielenden physikalischen Effekte beruhen auf der Vergrößerung der Stoffaustauschfläche, der Erhöhung der Stoffbewegung und der Erniedrigung des Partialdrucks der gasförmigen Phasen. Auf diese Weise kann z.B. der Partialdruck von restlichen flüchtigen Bestandteilen bei der Schneckeneindampfung hochviskoser Flüssigkeiten minimiert werden.

## Patentansprüche

1. Mehrwellige Schneckenmaschine mit mindestens einer den Schneckenraumquerschnitt ausfüllenden, senkrecht zu den Schneckenwellen (2, 3) stehenden Stauscheibe (7, 7a, 7b), die axial fixiert, aber frei drehbar bezüglich der Schneckenwellen (2, 3) angeordnet ist und mindestens eine Produktdurchtrittsöffnung (11) aufweist, dadurch gekennzeichnet, daß am Umfang der Stauscheibe (7, 7a, 7b) zum Schneckengehäuse (1) hin ein radiales Spiel (S₁) verbleibt, daß die Stauscheibe (7, 7a, 7b) in axialer Richtung fixiert, aber mit radialem Spiel auf formschlüssig mit den Schneckenwellen (2,3) verbundenen Distanzhülsen (14a, 14b, 14c, 14d) derart gelagert ist, daß die Drehung der Distanzhülsen (14a, 14b, 14c, 14d) relativ zu der Stauscheibe (7, 7a, 7b) nicht behindert wird, und daß die Distanzhülsen (14a, 14b, 14c, 14d) als Besatzelemente auf die Schneckenwellen (2, 3) aufschiebbar sind.

2. Schneckenmaschine nach Anspruch 1, dadurch gekennzeichnet, daß die Produktdurchtrittsöffnung (11) einen spaltförmigen Querschnitt hat, der mittels einer am Schneckengehäuse (1) angebrachten Stellschraube (12) einstellbar ist.

3. Schneckenmaschine nach Anspruch 1 bis 2, dadurch gekennzeichnet, daß sich die Stauscheibe (7) aus zwei - bis auf ein abgeschnittenes Segment - ringförmigen Scheiben (7a, 7b) zusammensetzt, wobei die Scheiben (7a, 7b) frei drehbar derart an den Schneckenwellen (2, 3) angeordnet sind, daß die Basislinien der abgeschnittenen Segmente aneinander angrenzen.

4. Schneckenmaschine nach Ansprüchen 1 bis 3, dadurch gekennzeichnet, daß die Stauscheibe (7, 7a, 7b) eine Vielzahl von Bohrungen (13) als Produktdurchtrittsöffnungen aufweist.

5. Schneckenmaschine nach Ansprüchen 1 bis 4, dadurch gekennzeichnet, daß die formschlüssig mit den Schneckenwellen (2, 3) verbundenen Distanzhülsen (14) ebenfalls Produktdurchtrittsöffnungen (17) aufweisen.

6. Schneckenmaschine nach Ansprüchen 1 bis 3, dadurch gekennzeichnet, daß im Bereich der Stauscheibe (7, 7a, 7b) ein Drucksensor (18) zur Messung des Druckanstieges im Schneckenraum angeordnet ist und daß der Druckmeßwert einer Regelvorrichtung (19) zugeführt wird, die den freien Querschnitt der Produktdurchtrittsöffnung (11) so nachregelt, daß der Betriebsdruck im Bereich der Stauscheibe (7, 7a, 7b) konstant bleibt.

## Claims

1. Multishaft screw machine with at least one baffle plate (7, 7a, 7b) which fills the screw chamber cross section, is perpendicular to the screw shafts (2, 3) and axially fixed, yet disposed so as to rotate freely with respect to the screw shafts (2, 3), and comprises at least one product passage opening (11), characterised in that a radial clearance (S₁) remains at the circumference of the baffle plate (7, 7a, 7b) towards the screw housing (1), that the baffle plate (7, 7a, 7b) is fixed in the axial direction, yet is mounted with a radial clearance on spacer sleeves (14a, 14b, 14c, 14d), which are positively connected to the screw shafts (2, 3), such that the rotation of the spacer sleeves (14a, 14b, 14c, 14d) relative to the baffle plate (7, 7a, 7b) is not impeded, and that the spacer sleeves (14a, 14b, 14c, 14d) can be pushed as fittings onto the screw shafts (2, 3).

2. Screw machine according to claim 1, characterised in that the product passage opening (11) has a slot-shaped cross section which can be adjusted by means of an adjusting screw (12) attached to the screw housing (1).

3. Screw machine according to claims 1 and 2, characterised in that the baffle plate (7) consists of two plates (7a, 7b) which - except for a cut-off segment - are annular and disposed so as to rotate freely on the screw shafts (2, 3) such that the base lines of the cut-off segments adjoin one another.

4. Screw machine according to claims 1 to 3, characterised in that the baffle plate (7, 7a, 7b) comprises a plurality of holes (13) as product passage openings.

5. Screw machine according to claims 1 to 4, characterised in that the spacer sleeves (14) which are positively connected to the screw shafts (2, 3) also comprise product passage openings (17).

6. Screw machine according to claims 1 to 3, characterised in that a pressure sensor (18) is disposed in the region of the baffle plate (7, 7a, 7b) to measure the increase in pressure in the screw chamber, and that the measured pressure value is delivered to a regulating device (19) which adjusts the free cross section of the product passage opening (11) such that the operating pressure in the region of the baffle plate (7, 7a, 7b) remains constant.

## Revendications

1. Extrudeuse à vis à arbres multiples comportant au moins un disque d'accumulation (7, 7a, 7b) remplissant la section transversale de la chambre à vis, situé perpendiculairement aux arbres à vis (2, 3), fixé axialement mais agencé en rotation libre par rapport aux arbres à vis (2, 3) et présentant au moins une ouverture de passage (11) pour le produit, caractérisée en ce qu'un jeu radial (S₁) demeure à la périphérie du disque d'accumulation (7, 7a, 7b) par rapport au boîtier de vis (1), en ce que le disque d'accumulation (7, 7a, 7b) est fixé en direction axiale mais monté avec un jeu radial sur des douilles d'écartement (14a, 14b, 14c, 14d) reliées en coopération de formes aux arbres à vis (2, 3), de telle façon que la rotation des douilles d'écartement (14a, 14b, 14c, 14d) par rapport au disque d'accumulation (7, 7a, 7b) n'est pas entravée, et en ce que les douilles d'écartement (14a, 14b, 14c, 14d) peuvent être enfilées comme éléments d'équipement sur les arbres à vis (2, 3).

2. Extrudeuse à vis selon la revendication 1, caractérisée en ce que l'ouverture de passage de produit (11) présente une section transversale en forme de fente qui est réglable au moyen d'une vis de réglage (12) agencée sur le boîtier d'extrudeuse (1).

3. Extrudeuse à vis selon les revendications 1 et 2, caractérisée en ce que le disque d'accumulation (7) se compose de deux disques annulaires (7a, 7b), sauf un segment découpé, les disques (7a, 7b) étant agencés en rotation libre sur les arbres à vis (2, 3) de telle façon que les lignes de base des segments découpés sont adjacentes l'une à l'autre.

4. Extrudeuse à vis selon l'une quelconque des revendications 1 à 3, caractérisée en ce que le disque d'accumulation (7, 7a, 7b) présente une multitude de perçages (13) comme ouvertures de passage pour le produit.

5. Extrudeuse à vis selon l'une quelconque des revendications 1 à 4, caractérisée en ce que les douilles d'écartement (14) reliées en coopération de formes aux arbres à vis (2, 3) présentent également des ouvertures (17) pour le passage du produit.

6. Extrudeuse à vis selon l'une quelconque des revendications 1 à 3, caractérisée en ce qu'il est prévu dans la région du disque d'accumulation (7, 7a, 7b) un capteur de pression (18) pour mesurer l'augmentation de pression dans la chambre à vis, et en ce que la valeur mesurée de pression est amenée à un dispositif de régulation (19) qui réajuste la section libre de l'ouverture de passage de produit (11) de telle façon que la pression de fonctionnement dans la région du disque d'accumulation (7, 7a, 7b) reste constante.
